# EUROPEAN PATENT APPLICATION

(11) **EP 1 391 559 A1**
(43) Date of publication of application: **25.02.2004**
(21) Application number: 03015688.9
(22) Date of filing: 21.07.2003
(51) Int. Cl.: E01H 1/08, A01G 1/12

(54) **Sweeping machine for cleaning surfaces**

(30) Priority: 09.08.2002 IT MO20020037
(71) Applicant: R.C.M. S.p.A., 41041 Casinalbo (Modena) (IT)
(72) Inventor: Raimondi, Renzo, 41041 Fraz. Casinalbo-Formigine (MO) (IT)
(74) Representative: Modiano, Guido, Dr.-Ing.

(57) **Abstract**

A sweeping machine (1) for cleaning surfaces, comprising a wheeled chassis (2) and a suction unit (4) for aspirating litter from a surface (S) to be cleaned, further comprising a tubular body (5) for conveying the aspirated litter, which tubular body (5) is provided with a lower port (5a) that partially accommodates internally, so that it protrudes, a substantially cylindrical rotating brush (6) that is suitable to be arranged tangent to the surface (S), an upper port (5b) that is connected to a compartment (7) for collecting the litter, which compartment (7) is associated with a suction device (8), and an intermediate portion (5c) for connecting the lower and upper ports (5a,5b), the shape of the tubular body (5) and/or the size and rotation rate of the brush (6) being adapted to facilitate the suction.

## Description

The present invention relates to a sweeping machine for cleaning surfaces.

Various kinds of sweeping machine are known for removing dust and litter in general from sidewalks, corridors and the like, both in open spaces and inside public buildings and commercial establishments.

Some machines of the known type, which are the subject of a prior patent in the name of this same Applicant, use at least one pair of contrarotating cylindrical brushes, which are arranged laterally adjacent and tangent to the surface to be cleaned, and a lifting device that is associated with a suction fan for transferring the litter collected by the brushes upward into a chamber that is shaped like a hopper and is provided on its bottom with an outlet port that is associable with a removable container for collecting said litter.

The lifting device provided inside these machines comprises a rotor with vanes, which is accommodated in a duct for transferring the litter from the collection region at the brushes toward the overlying chamber.

Moreover, these machines of a known type have drawbacks, including the fact that they require the fitting of a lifting device and the use of at least two contrarotating brushes, which inevitably affect production times and costs.

As an alternative, sweeping machines are also known which, in order to avoid fitting the lifting device, use at least two suction fans associated with a duct that is connected to a container for collecting the aspirated dust.

Moreover, in order to maximize the flow directed toward the collection container, said duct has a transverse cross-section that is as small as possible and is substantially circular.

These machines too, therefore, are susceptible of further improvements, aimed in particular at reducing their dimensions, simplifying their structure, and improving suction efficiency.

The aim of the present invention is to eliminate the above-noted drawbacks, by providing a sweeping machine for cleaning surfaces that allows to reduce manufacturing times and costs, to simplify the operations for the assembly and maintenance of the various components, and to aspirate litter, such as dust, stones or the like, of the most disparate sizes.

Within this aim, an object of the present invention is to provide a sweeping machine that is simple, relatively easy to provide in practice, safe in use, effective in operation, and relatively costeffective.

This aim and this and other objects that will become better apparent hereinafter are achieved by the present sweeping machine for cleaning surfaces, which comprises a wheeled chassis for containing a unit for aspirating litter from a surface to be cleaned, characterized in that said suction unit comprises a tubular body for conveying the aspirated litter which is provided with a lower port that partially accommodates internally, so that it protrudes, a substantially cylindrical rotating brush that is suitable to be arranged tangent to the surface, an upper port that is connected to a compartment for collecting the litter and is associated with a suction device, and an intermediate portion for connecting the ports, the shape of the tubular body and/or the size and rotation rate of the brush being suitable to facilitate said suction.

Further characteristics and advantages of the present invention will become better apparent from the following detailed description of a preferred but not exclusive embodiment of a sweeping machine for cleaning surfaces, illustrated by way of non-limitative example in the accompanying drawings, wherein:

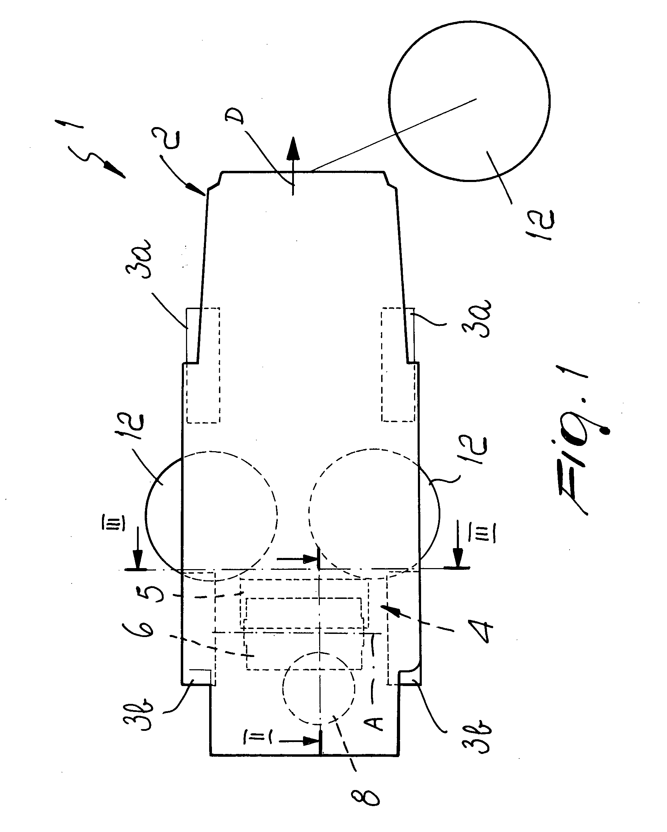

Figure 1 is a schematic and partial plan view of a sweeping machine for cleaning surfaces according to the invention;

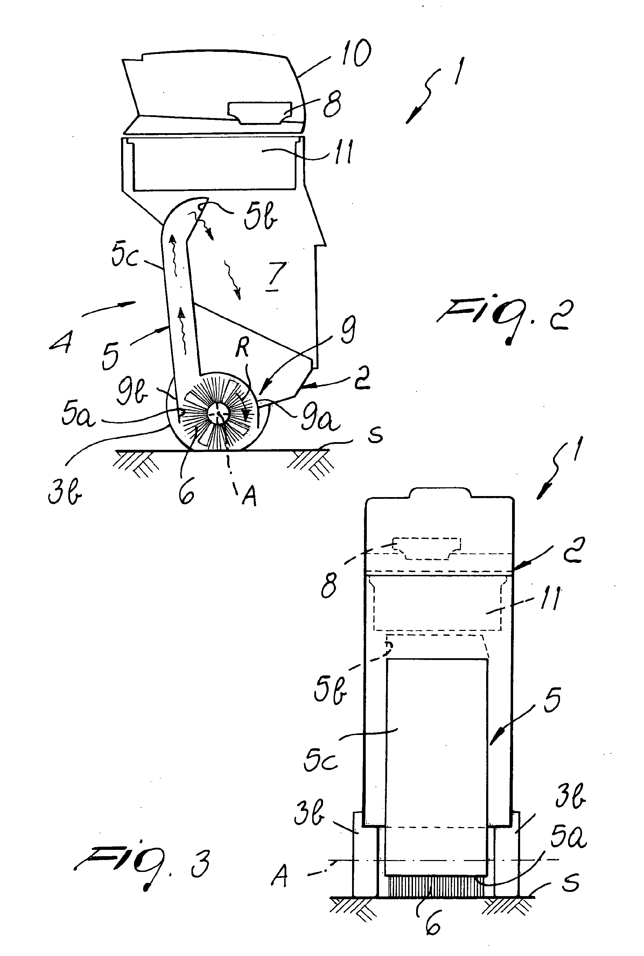

Figure 2 is a sectional view, taken along the line II-II, of the machine of Figure 1;
Figure 3 is a sectional view, taken along the line III-III, of the machine of Figure 1.

With reference to the figures, the reference numeral 1 generally designates a sweeping machine for cleaning surfaces.

The machine 1 comprises a chassis 2 that can move on wheels 3, namely two front wheels 3a and two rear wheels 3b with respect to the advancement direction D of the machine, in order to contain a unit 4 for aspirating litter from a surface S to be cleaned.

The suction unit 4 comprises a tubular body 5 for conveying aspirated litter, which is provided with a lower port 5a that accommodates internally, so that it protrudes partially, a cylindrical rotating brush 6 that is arranged tangent to a surface S to be cleaned, with an upper port 5b, which is connected to a compartment 7 for collecting the litter removed from the surface S and is associated with a suction device such as a fan 8, and with an intermediate portion 5c for connecting the ports 5a and 5b.

Advantageously, the shape of the tubular body 5 and the dimensions and rotation rate of the rotating brush 6 cooperate so as to create a vacuum inside the body, generating a sort of entrainment effect on the collected material.

The rotating brush 6 is arranged horizontally and so that its rotation axis A lies transversely to the advancement direction D of the machine, and is arranged at the rear portion of the machine 1.

The rotation axis A lies on the same vertical plane that contains the axis of the rear wheels 3b or proximate thereto.

This last constructive constraint allows the rotating brush 6 to remain tangent to the surface S at level variations or uneven regions of said surface.

The diameter of the rotating brush 6 is smaller than the diameter of the wheels 3, so that for a given travel speed of the machine 1 the angular velocity of the brush is greater than that of the wheels 3.

Finally, the direction of rotation R of the rotating brush 6 is such as to direct the litter toward the lower port 5a.

The lower port 5a is constituted by at least two mutually opposite wings 9, which surround the upper portion of the rotating brush 6: one wing 9a is located at the front and is curved, while the other wing 9b is located at the rear and is straight.

Conveniently, the intermediate portion 5c is constituted by a duct that has a rectangular transverse cross-section and is as wide as the rotating brush 6 is long.

This configuration of the intermediate portion 5c allows to collect both dust-like litter and larger litter.

The upper port 5b is connected to the compartment 7, which is arranged in the rear part of the machine 1.

Conveniently, the compartment 7 is provided with means for removing the collected litter, which are not shown because they are of the conventional type and can provide for a bag, container or other device detachably accommodated within said compartment.

The fan 8 is arranged above the compartment 7 and is covered by a hood 10.

The suction unit 4 further comprises a device 11 for filtering the air in output, which is interposed between the compartment 7 and the fan 8 and is arranged above the upper port 5b.

At least one and preferably a plurality of auxiliary brushes 12 are supported by the chassis 2, can rotate about vertical axes, and are arranged in contact with the surface S in front and laterally with respect to the rotating brush 6.

The auxiliary brushes 12, by rotating, collect the litter and arrange it on the path of the brush 6, facilitating its suction.

In practice it has been found that the described invention achieves the intended aim and object.

In particular, the contour of the body 5 and the dimensions of the brush 6, associated with a single fan 8, allow the machine 1 to aspirate a wide variety of litter without the aid of expensive and bulky additional devices.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Utility Model Application No. MO2002U000037 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A sweeping machine (1) for cleaning surfaces, comprising a wheeled chassis (2) for containing a suction unit (4) for aspirating litter from a surface (S) to be cleaned, **characterized in that** said suction unit (4) comprises a tubular body (5) for conveying the aspirated litter which is provided with a lower port (5a) that partially accommodates internally, so that it protrudes, a substantially cylindrical rotating brush (6) that is suitable to be arranged tangent to said surface (S), an upper port (5b) that is connected to a compartment (7) for collecting said litter and is associated with a suction device (8), and an intermediate portion (5c) for connecting the lower and upper ports (5a, 5b), the shape of the tubular body and/or the size and rotation rate of the brush being adapted to facilitate said suction.

2. The machine according to claim 1, **characterized in that** said intermediate portion (5c) has a transverse extension, with respect to the travel direction (D) of said machine, that is on the order of the length of said brush (6).

3. The machine according to claim 1, **characterized in that** said intermediate portion (5c) has a substantially rectangular cross-section.

4. The machine according to claim 1, **characterized in that** said suction device (8) comprises a fan or the like.

5. The machine according to one or more of the preceding claims, **characterized in that** said brush (6) is arranged at the rear portion of said machine (1).

6. The machine according to one or more of the preceding claims, **characterized in that** the direction of rotation of said brush (6) is suitable to direct said litter toward said lower port (5a).

7. The machine according to one or more of the preceding claims, **characterized in that** said suction unit (4) comprises at least one auxiliary brush (12), which is arranged in front of said brush (6).

8. The machine according to one or more of the preceding claims,
**characterized in that** said lower port (5a) comprises at least one pair of mutually opposite wings, which are suitable to wrap around the upper portion of said rotating brush.

9. The machine according to one or more of the preceding claims, **characterized in that** said pair of mutually opposite wings (9) is constituted by a substantially curved front wing (9a) and by a substantially straight rear wing (9b).
